# EUROPEAN PATENT APPLICATION

(11) **EP 4 696 912 A1**
(43) Date of publication of application: **18.02.2026**
(21) Application number: 23933119.2
(22) Date of filing: 19.12.2023
(51) Int. Cl.: F16K 31/02

(54) **VALVE DEVICE**

(30) Priority: 11.04.2023 JP 2023063876
(71) Applicant: SMC Corporation, Tokyo 104-0031 (JP)
(72) Inventor: WATANABE Takashi, Tsukubamirai-shi, Ibaraki 300-2493 (JP)
(74) Representative: Keil & Schaafhausen Patentanwälte PartGmbB
(86) International application number: PCT/JP2023/045481
(87) International publication number: WO 2024/214345

(57) **Abstract**

A valve device (10) is provided with: a nozzle (66) that has a flow hole (100) through which a fluid flows; a support member (62) that supports the nozzle; a valve body (68) that has a piezoelectric element (116) and opens and closes an opening (102) of the flow hole by driving of the piezoelectric element; and a position adjustment mechanism (76) for adjusting the position of the nozzle with respect to the valve body. The position adjustment mechanism has: an urging member (106) for urging the nozzle toward the valve body; and a stopper member (132) for preventing movement of the nozzle due to the urging member by coming into contact with the nozzle.

## Description

### TECHNICAL FIELD

The present invention relates to a valve device.

### BACKGROUND ART

For example, US 2012/0161045 A1 discloses a valve device provided with: a nozzle including a flow hole through which a fluid flows; and a valve element including a piezoelectric element. The valve element opens and closes the opening of the flow hole by driving the piezoelectric element.

### SUMMARY OF THE INVENTION

There has been a demand for a valve device capable of favorably opening and closing an opening of a flow hole of a nozzle.

The present invention has the object of solving the aforementioned problem.

An aspect of the present invention is characterized by a valve device comprising: a nozzle including a flow hole through which a fluid flows; a support member configured to support the nozzle; a valve element including a piezoelectric element and configured to open and close an opening of the flow hole by driving the piezoelectric element; and a position adjustment mechanism configured to adjust a position of the nozzle relative to the valve element.

According to the present invention, the opening of the flow hole of the nozzle can be favorably opened and closed.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF DRAWINGS

[FIG. 1] FIG. 1 is a partially omitted perspective view of a valve device according to an embodiment of the present invention;
[FIG. 2] FIG. 2 is a partially sectional front view of the valve device;
[FIG. 3] FIG. 3 is a longitudinal cross-sectional view of the valve device;
[FIG. 4] FIG. 4 is a partially omitted longitudinal cross-sectional view of the valve device;
[FIG. 5] FIG. 5 is a transverse cross-sectional view taken along line V-V of FIG. 3;
[FIG. 6] FIG. 6 is a cross-sectional view taken along line VI-VI of FIG. 5;
[FIG. 7] FIG. 7 is an exploded perspective view of an air supply valve unit;
[FIG. 8] FIG. 8 is a transverse cross-sectional view taken along line VIII-VIII of FIG. 6;
[FIG. 9] FIG. 9 is a transverse cross-sectional view taken along line IX-IX of FIG. 3; and
[FIG. 10] FIG. 10 is a view explaining the operation of the air supply valve unit.

### DETAILED DESCRIPTION OF THE INVENTION

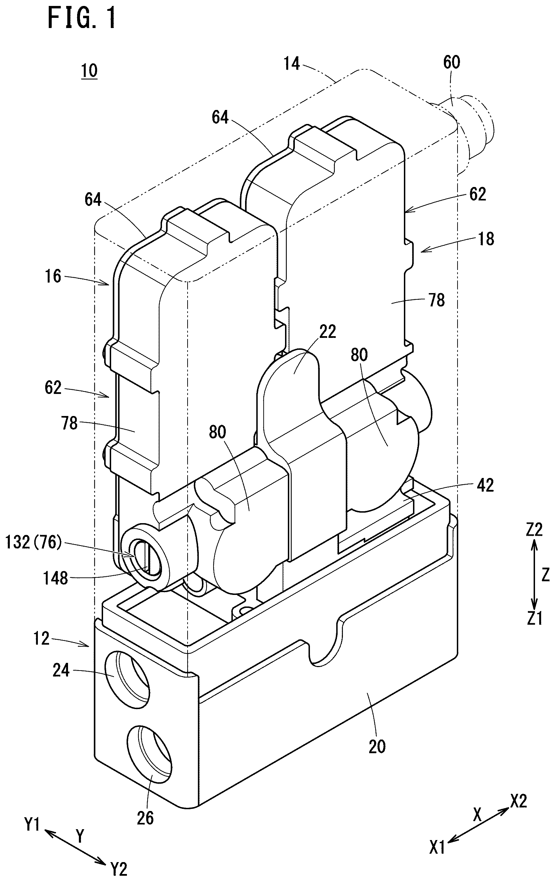

A valve device 10 according to an embodiment of the present invention will be described below with reference to the drawings. As shown in FIG. 1, the valve device 10 according to the present embodiment is an electro-pneumatic regulator for controlling the pressure of a fluid (pressure fluid) to be output. The pressure fluid is, for example, compressed air. Note that the pressure fluid is not limited to compressed air, and may be another gas. Further, the valve device 10 is not limited to an electro-pneumatic regulator.

The valve device 10 is formed in, for example, a vertically long rectangular parallelepiped shape as a whole. As shown in FIGS. 1 to 3, the valve device 10 includes a body 12, a casing 14, an air supply valve unit 16, and an exhaust valve unit 18.

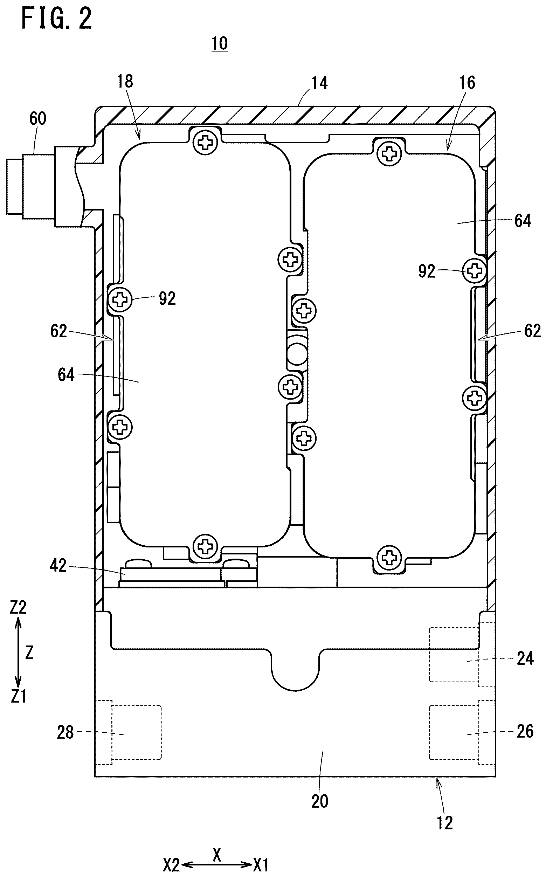

The body 12 includes a base portion 20 and a coupling portion 22. The base portion 20 extends in the width direction of the valve device 10 (in an X direction). As shown in FIGS. 2 to 4, an air supply port 24 and an exhaust port 26 are formed in one end surface of the base portion 20 in the longitudinal direction (an end surface in an X1 direction). The air supply port 24 and the exhaust port 26 are arranged to be shifted from each other in the height direction of the valve device 10 (in a Z direction). An output port 28 is formed in the other end surface of the base portion 20 in the longitudinal direction (an end surface in an X2 direction). For example, a bolt hole (not shown) or the like for attaching a bracket or the like is formed in a bottom surface (a surface facing in a Z1 direction) of the base portion 20.

An air supply tube (not shown) for supplying a pressure fluid to the valve device 10 is connected to the air supply port 24. The exhaust port 26 is a hole for discharging the pressure fluid to the outside of the valve device 10. A lead-out tube (not shown) for guiding the pressure fluid to a fluid pressure device (not shown) is connected to the output port 28.

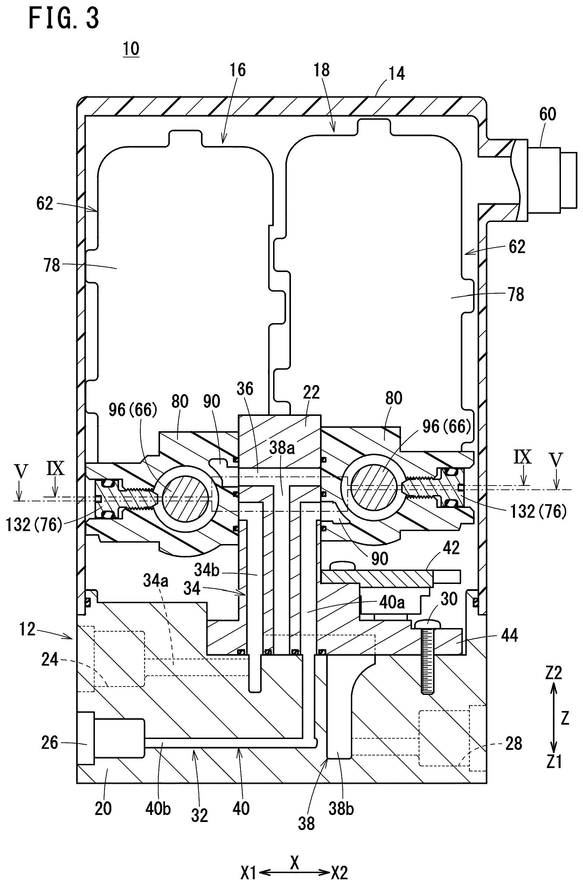

As shown in FIG. 3, the coupling portion 22 is attached by a bolt 30 to a surface of the base portion 20 that faces the opposite side (a Z2 direction) from the side toward which the bottom surface faces. The coupling portion 22 protrudes further in the Z2 direction than the base portion 20. The air supply valve unit 16 and the exhaust valve unit 18 are attached to the protruding end portion of the coupling portion 22. The air supply valve unit 16 is disposed on the X1 direction side of the coupling portion 22, and the exhaust valve unit 18 is disposed on the X2 direction side of the coupling portion 22.

A fluid flow path 32 through which the pressure fluid flows is formed in the body 12. The fluid flow path 32 includes an air supply flow path 34, an intermediate flow path 36, an output flow path 38, and an exhaust flow path 40. The air supply flow path 34 guides the pressure fluid, which has been supplied to the air supply port 24, to the air supply valve unit 16. The intermediate flow path 36 guides the pressure fluid, which has been led out from the air supply valve unit 16, to the exhaust valve unit 18. The output flow path 38 guides the pressure fluid, which has been led out from the air supply valve unit 16 to the intermediate flow path 36, to the output port 28. The exhaust flow path 40 guides the pressure fluid, which has been led out from the exhaust valve unit 18, to the exhaust port 26.

The air supply flow path 34 includes a first air supply flow path 34a and a second air supply flow path 34b. The first air supply flow path 34a is formed in the base portion 20. One end portion of the first air supply flow path 34a communicates with the air supply port 24. The second air supply flow path 34b is formed in the coupling portion 22. The second air supply flow path 34b extends along the Z direction. One end portion of the second air supply flow path 34b communicates with the other end portion of the first air supply flow path 34a. The other end portion of the second air supply flow path 34b is connected to the air supply valve unit 16.

The intermediate flow path 36 extends so as to penetrate the coupling portion 22 in the width direction (the X direction). The intermediate flow path 36 is located further in the Z2 direction than the second air supply flow path 34b.

The output flow path 38 includes a first output flow path 38a and a second output flow path 38b. The first output flow path 38a is formed in the coupling portion 22. One end portion of the first output flow path 38a communicates with the intermediate flow path 36. The second output flow path 38b is formed in the base portion 20. One end portion of the second output flow path 38b communicates with the other end portion of the first output flow path 38a. The other end portion of the second output flow path 38b communicates with the output port 28.

The exhaust flow path 40 includes a first exhaust flow path 40a and a second exhaust flow path 40b. The first exhaust flow path 40a is formed in the coupling portion 22. One end portion of the first exhaust flow path 40a is connected to the exhaust valve unit 18. The first output flow path 38a is located between the first exhaust flow path 40a and the second air supply flow path 34b. The second exhaust flow path 40b is formed in the base portion 20. One end portion of the second exhaust flow path 40b communicates with the other end portion of the first exhaust flow path 40a. The other end portion of the second exhaust flow path 40b communicates with the exhaust port 26.

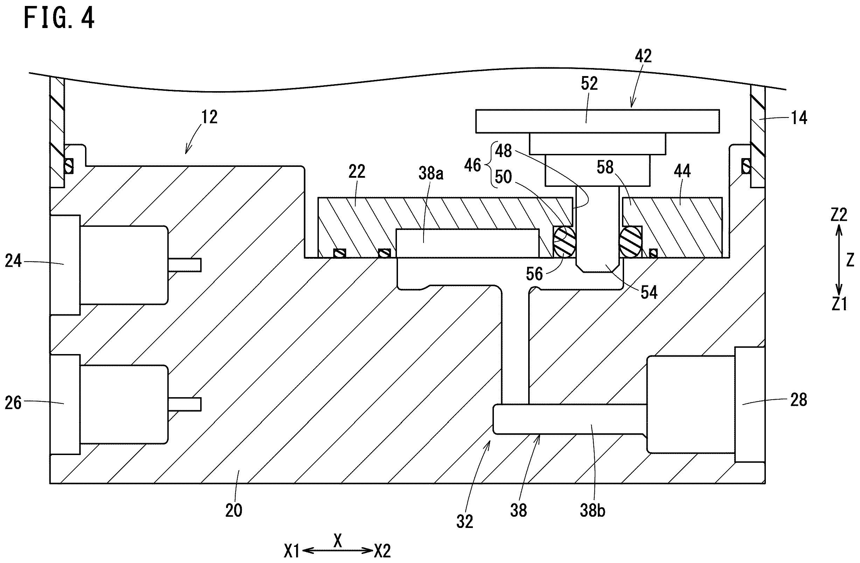

As shown in FIG. 4, the body 12 includes a sensor attachment portion 44 for attaching a pressure sensor 42. The sensor attachment portion 44 is integrally formed with the coupling portion 22. The sensor attachment portion 44 is provided so as to cover the second output flow path 38b of the base portion 20 from the Z2 direction. A through hole 46 that opens in the second output flow path 38b is formed in the sensor attachment portion 44. The through hole 46 includes a small-diameter portion 48 and a large-diameter portion 50. The small-diameter portion 48 opens on a surface of the sensor attachment portion 44 that faces in the Z2 direction. The large-diameter portion 50 communicates with the small-diameter portion 48 and opens on a surface of the sensor attachment portion 44 that faces in the Z1 direction.

The pressure sensor 42 includes a sensor body 52, and an introducing tube portion 54. The sensor body 52 is located outside the body 12. In other words, the sensor body 52 is disposed outside the fluid flow path 32. The introducing tube portion 54 protrudes from the sensor body 52 to the second output flow path 38b via the through hole 46. The introducing tube portion 54 introduces the pressure fluid flowing through the second output flow path 38b, into the sensor body 52. The introducing tube portion 54 is provided with a sensor seal member 56 that seals a gap between the introducing tube portion 54 and the sensor attachment portion 44.

The sensor seal member 56 is an annular rubber seal. The sensor seal member 56 is disposed in the large-diameter portion 50. The sensor seal member 56 is spaced apart from the sensor body 52. The sensor attachment portion 44 includes a seal support portion 58 that is located between the sensor seal member 56 and the sensor body 52 and supports the sensor seal member 56.

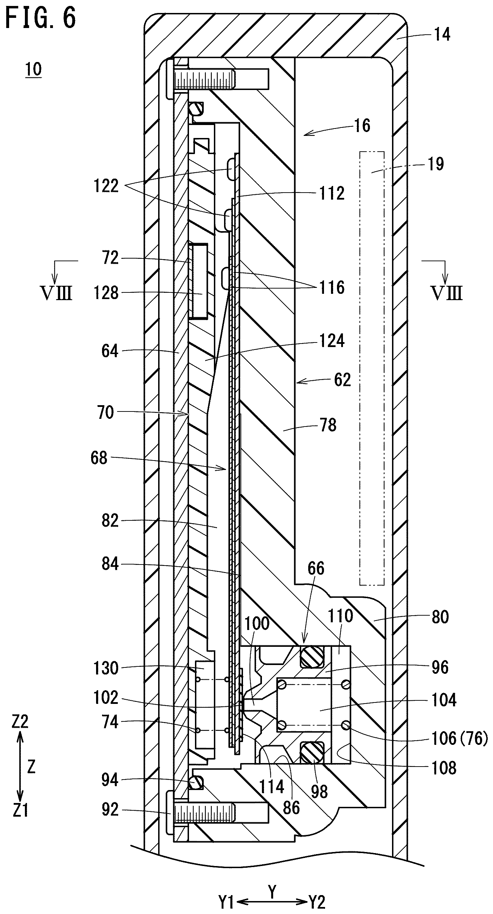

As shown in FIGS. 1 to 3, the casing 14 is provided on the Z2 direction side of the base portion 20. The casing 14 accommodates therein the air supply valve unit 16, the exhaust valve unit 18, the pressure sensor 42, a control unit 19 (see FIG. 6), and the like. The casing 14 is provided with a connector 60 for connection to an external controller or the like.

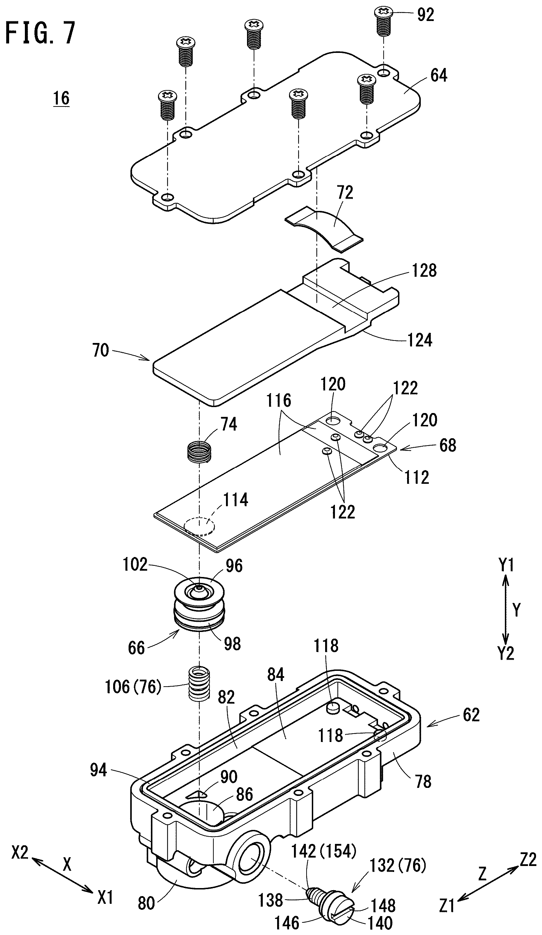

As shown in FIGS. 6 and 7, the air supply valve unit 16 includes a support member 62, a cover member 64, a nozzle 66, a valve element 68, a resin plate 70, a pressing member 72, a valve element biasing member 74, and a position adjustment mechanism 76.

The support member 62 is made of, for example, a hard resin material. The support member 62 includes a support body 78 and a nozzle support portion 80. The support body 78 extends in the Z direction. The support body 78 includes an accommodation chamber 82 for accommodating the valve element 68. The accommodation chamber 82 opens in the Y1 direction.

The nozzle support portion 80 protrudes in the Y2 direction from the support body 78. The nozzle support portion 80 is located at an end portion of the support body 78 in the Z1 direction. A circular recess 86 that is recessed in the Y2 direction from a bottom surface 84 of the accommodation chamber 82 is formed in the nozzle support portion 80 (see FIG. 6). The nozzle 66 is disposed in the recess 86. The nozzle support portion 80 is attached to a surface of the coupling portion 22 that faces in the X1 direction by a non-illustrated bolt or the like (see FIG. 3).

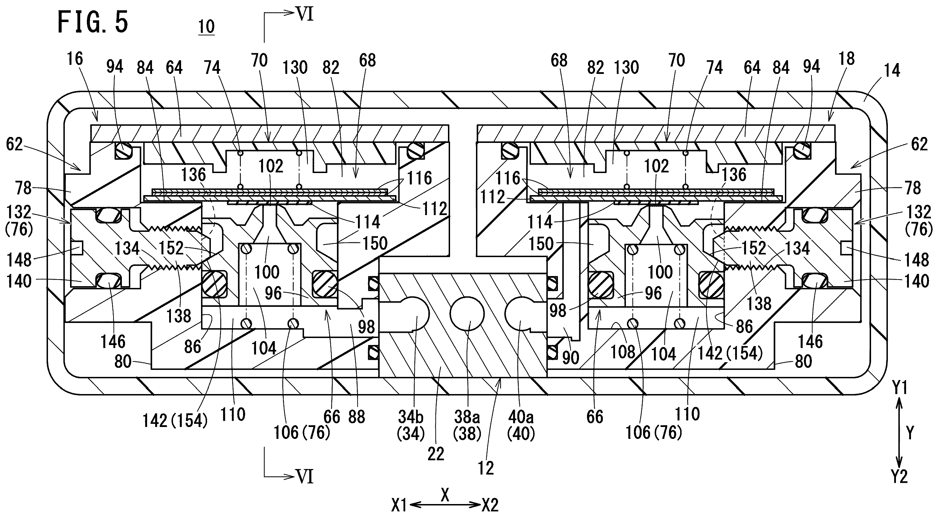

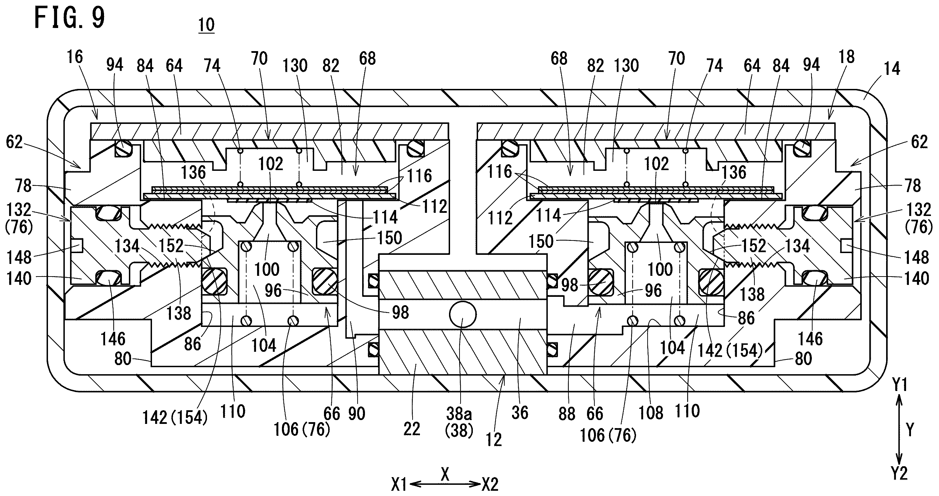

As shown in FIGS. 5 and 9, an inlet flow path 88 and an outlet flow path 90 are formed in the support member 62. As shown in FIG. 5, the inlet flow path 88 guides the pressure fluid, which has been guided from the air supply flow path 34, to the inside of the recess 86. The inlet flow path 88 opens on the inner surface of the recess 86. As shown in FIG. 9, the outlet flow path 90 guides the pressure fluid, which has flowed through the inside of the support member 62, to the intermediate flow path 36. The outlet flow path 90 opens on the bottom surface 84 of the accommodation chamber 82 (see FIG. 7).

As shown in FIGS. 6 and 7, the cover member 64 is attached to the support body 78 by screw members 92 so as to close the opening of the accommodation chamber 82 in the Y1 direction. The cover member 64 is made of a metal material. A seal member 94 for preventing the pressure fluid from leaking to the outside is provided between the support body 78 and the cover member 64.

The nozzle 66 includes a nozzle body 96 and a nozzle seal member 98. The nozzle body 96 is made of, for example, a metal material. Examples of the metal material constituting the nozzle body 96 include aluminum, brass, and stainless steel. The metal material may be subjected to surface treatment such as chromate treatment.

As shown in FIG. 6, the nozzle body 96 includes a flow hole 100 through which the pressure fluid flows. An opening 102 of the flow hole 100 is formed in a distal end surface of the nozzle body 96 that faces in the Y1 direction. A first attachment recess 104 is formed in a proximal end surface of the nozzle body 96 that faces in the Y2 direction. The first attachment recess 104 communicates with the flow hole 100. A biasing member 106 that forms the position adjustment mechanism 76 is disposed in the first attachment recess 104.

The biasing member 106 biases the nozzle body 96 toward the Y1 direction. The biasing member 106 is, for example, a helical compression spring. It should be noted that the biasing member 106 may be a spring member other than the helical compression spring, or may be a rubber member or the like that is elastically deformed. An internal flow path 110 through which the pressure fluid can flow is provided between the nozzle body 96 and a bottom surface 108 of the recess 86. The internal flow path 110 communicates with the inlet flow path 88 (see FIG. 5). The nozzle seal member 98 seals a gap between the outer peripheral surface of the nozzle body 96 and the inner peripheral surface of the recess 86.

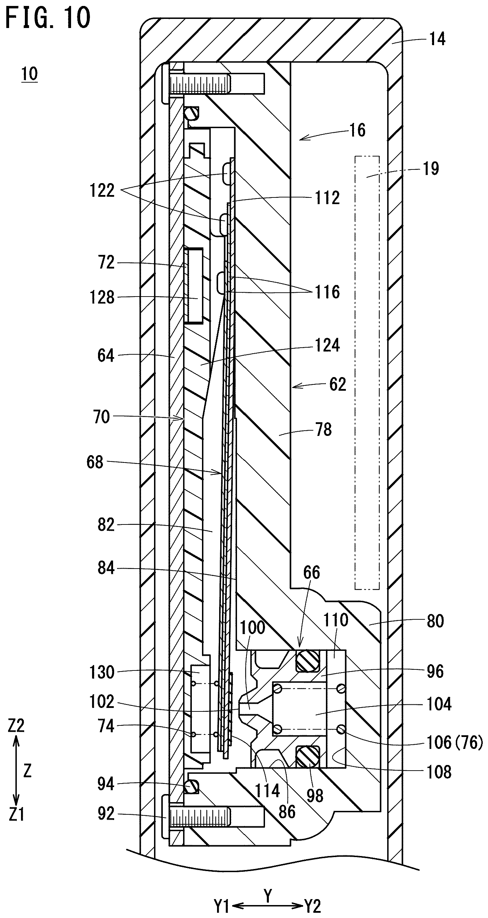

As shown in FIGS. 6 and 7, the valve element 68 is disposed in the accommodation chamber 82. The valve element 68 includes a plate member 112, a contact portion 114, and a piezoelectric element 116. The valve element 68 opens and closes the opening 102 of the flow hole 100 by driving the piezoelectric element 116 (see FIGS. 6 and 10). The plate member 112 is a rectangular metal plate having flexibility and extending in the Z direction. Positioning holes 120 into which a pair of protrusions 118 provided on the bottom surface 84 of the accommodation chamber 82 are inserted are formed in the corners of one end portion (an end portion in the Z2 direction) of the plate member 112 (see FIG. 7). The other end portion (an end portion in the Z1 direction) of the plate member 112 covers a part of the recess 86 from the Y1 direction.

The contact portion 114 is attached to a surface of the plate member 112 that faces in the Y2 direction. The contact portion 114 and the opening 102 of the flow hole 100 face each other. The contact portion 114 is made of a resin material such as rubber that is elastically deformable. The contact portion 114 closes the opening 102 of the flow hole 100 by coming into airtight contact with the distal end surface of the nozzle body 96.

The piezoelectric element 116 is a piezoelectric plate extending in a rectangular plate shape along the extending direction of the plate member 112 (the Z direction). A plurality of the piezoelectric elements 116 are stacked. In the present embodiment, two piezoelectric elements 116 are stacked. Note that the number of the piezoelectric elements 116 may be one. Further, in the air supply valve unit 16, three or more piezoelectric elements 116 may be stacked. The piezoelectric elements 116 are attached to a surface of the plate member 112 that faces in the Y1 direction. A plurality of joint portions 122 to which cables (not shown) for driving the piezoelectric elements 116 are joined are provided at an end portion of the valve element 68 in the Z2 direction. The joint portion 122 is, for example, a soldered portion or a brazed portion.

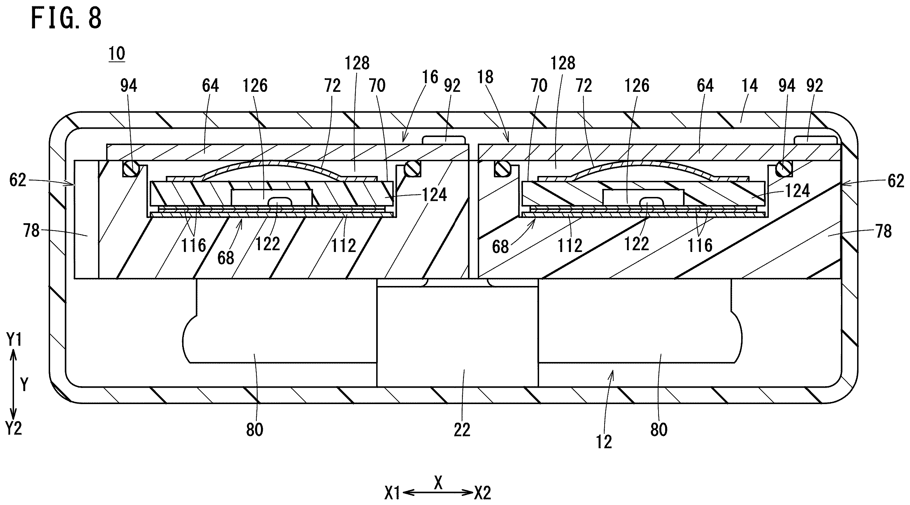

The resin plate 70 has an insulating property. The resin plate 70 extends in a rectangular shape along the extending direction of the plate member 112 (the Z direction). As shown in FIGS. 6 to 8, a protruding portion 124 protruding in the Y2 direction is provided at one end portion (an end portion in the Z2 direction) of the resin plate 70. The protruding portion 124 contacts one end portion of the valve element 68. A relief groove 126 for relieving the plurality of joint portions 122 is formed in an intermediate part of the protruding portion 124 in the X direction (see FIG. 8).

A groove portion 128 is formed in the resin plate 70 on the opposite side from the protruding portion 124. The groove portion 128 extends over the entire length of the resin plate 70 in the X direction. The pressing member 72 is disposed between the bottom surface of the groove portion 128 and the cover member 64. The pressing member 72 presses the protruding portion 124 toward the valve element 68. As a result, the valve element 68 is held by the support member 62. The pressing member 72 is, for example, a leaf spring. Note that the pressing member 72 is not limited to a leaf spring.

As shown in FIG. 6, a second attachment recess (an attachment recess) 130, to which the valve element biasing member 74 is attached, is formed in the other end portion (an end portion in the Z1 direction) of the resin plate 70. The valve element biasing member 74 biases the other end portion of the valve element 68 toward the nozzle body 96. The valve element biasing member 74 is a spring member made of metal. The valve element biasing member 74 is, for example, a helical compression spring. The valve element biasing member 74 and the contact portion 114 overlap each other when viewed from the Y direction (see FIG. 7).

In a state where no voltage is applied to the piezoelectric elements 116, the valve element 68 closes the opening 102 of the flow hole 100. That is, the contact portion 114 of the valve element 68 is pressed against the distal end surface of the nozzle 66 by the biasing force of the valve element biasing member 74. In a state where no voltage is applied to the piezoelectric elements 116, the valve element 68 blocks the communication between the inlet flow path 88 and the outlet flow path 90 (see FIGS. 5 and 9).

When a voltage is applied to the piezoelectric elements 116, then the valve element 68 opens the opening 102 of the flow hole 100 as shown in FIG. 10. Specifically, when a voltage is applied to the piezoelectric elements 116, a contraction force in the Z direction acts on the piezoelectric elements 116. The magnitude of the contraction force is proportional to the magnitude of the voltage applied to the piezoelectric elements 116. When the contraction force acts on the piezoelectric elements 116, the other end portion of the plate member 112 is elastically deformed so as to warp in the Y1 direction. As a result, the contact portion 114 is separated from the distal end surface of the nozzle 66, and the flow hole 100 is opened. In a state where a voltage is applied to the piezoelectric elements 116, the inlet flow path 88 and the outlet flow path 90 communicate with each other. The opening degree of the air supply valve unit 16 is adjusted by controlling the voltage applied to the piezoelectric elements 116.

In the air supply valve unit 16 described above, the valve element 68 (the contact portion 114) and the nozzle 66 (the opening 102 of the flow hole 100) need to be accurately set at predetermined positions.

As shown in FIG. 5, the position adjustment mechanism 76 adjusts the position of the nozzle 66 relative to the valve element 68 in the direction in which the opening 102 of the flow hole 100 faces (the Y1 direction). The position adjustment mechanism 76 includes the above-described biasing member 106 and a stopper member 132. By coming into contact with the nozzle 66, the stopper member 132 prevents the nozzle 66 from being moved by the biasing member 106.

The stopper member 132 is provided in the nozzle support portion 80 so as to be movable in a direction intersecting the biasing direction of the biasing member 106. Specifically, a screw hole 134 that opens on the inner peripheral surface of the recess 86 is formed in the nozzle support portion 80. An opening portion 136 of the screw hole 134 formed in the inner peripheral surface of the recess 86 is located further in the Y1 direction than the nozzle seal member 98. In other words, the nozzle seal member 98 is located between the opening portion 136 and the bottom surface 108 of the recess 86.

The stopper member 132 includes a threaded portion 138 and a head 140. The threaded portion 138 is screwed into the screw hole 134. A distal end portion of the threaded portion 138 is provided with a tapered surface 142 whose diameter decreases toward the distal direction of the threaded portion 138. The head 140 is provided at a proximal end portion of the threaded portion 138. A seal member 146 that seals a gap between the head 140 and the support member 62 is disposed at the head 140. The head 140 is provided with an operation portion 148 for rotating the threaded portion 138. The operation portion 148 is, for example, a groove into which a tool (not shown) is fitted. Note that the operation portion 148 is not limited to a groove, and may be a protrusion or the like that can be operated by a finger. The operation portion 148 is exposed to the outside of the support member 62.

The distal end portion of the threaded portion 138 is inserted into a locking recess 150 formed in the outer peripheral surface of the nozzle 66. The locking recess 150 is, for example, an annular groove. The locking recess 150 does not have to extend in an annular shape as long as the distal end portion of the threaded portion 138 can be inserted thereinto. A first contact surface 152 of the locking recess 150 that contacts the stopper member 132 is inclined with respect to the biasing direction of the biasing member 106 (the Y1 direction). The first contact surface 152 is inclined in the Y2 direction toward a radially outer side of the nozzle 66. The first contact surface 152 is also inclined with respect to the X-direction. The first contact surface 152 faces in the Y1 direction. The tapered surface 142 of the stopper member 132 is a second contact surface 154 that comes into contact with the nozzle 66. The inclination angle of the first contact surface 152 with respect to the X direction is equal to, or substantially equal to the inclination angle of the tapered surface 142 (the second contact surface 154) with respect to the X direction.

In the air supply valve unit 16, the stopper member 132 can be advanced and retracted with respect to the nozzle 66 by operating the operation portion 148 to rotate the threaded portion 138. When the stopper member 132 is advanced in the distal direction, the nozzle 66 is pressed in the Y2 direction by the stopper member 132. Therefore, the nozzle 66 moves in a direction away from the valve element 68 while pressing the biasing member 106 in the Y2 direction. That is, the opening 102 of the flow hole 100 of the nozzle 66 is displaced in a direction away from the valve element 68. On the other hand, when the stopper member 132 is retracted in the proximal direction, the nozzle 66 is moved in the Y1 direction toward the valve element 68 by the biasing force of the biasing member 106. That is, the opening 102 of the flow hole 100 of the nozzle 66 is displaced in a direction approaching the valve element 68.

In this manner, in the present embodiment, the positional relationship between the valve element 68 and the nozzle 66 can be adjusted easily and accurately by rotating the operation portion 148. Further, since the operation portion 148 is exposed to the outside of the support member 62, the positional relationship between the valve element 68 and the nozzle 66 can be adjusted after the air supply valve unit 16 is assembled.

The exhaust valve unit 18 is basically configured in the same manner as the above-described air supply valve unit 16. Therefore, a detailed description of the configuration, operation, and the like of the exhaust valve unit 18 will be omitted. In the exhaust valve unit 18, the positional relationship between the valve element 68 and the nozzle 66 can be adjusted in the same manner as in the air supply valve unit 16. It should be noted that the inlet flow path 88 of the exhaust valve unit 18 communicates with the intermediate flow path 36 (see FIG. 9). The outlet flow path 90 of the exhaust valve unit 18 communicates with the first exhaust flow path 40a (see FIG. 5).

In the valve device 10 described above, the pressure fluid supplied to the air supply port 24 is guided to the flow hole 100 via the first air supply flow path 34a, the second air supply flow path 34b, the inlet flow path 88, the internal flow path 110, and the first attachment recess 104 of the air supply valve unit 16. When the flow hole 100 of the air supply valve unit 16 is opened, the pressure fluid in the flow hole 100 is led out to the intermediate flow path 36 via the accommodation chamber 82 and the outlet flow path 90. The pressure fluid guided to the intermediate flow path 36 flows into the first output flow path 38a and the inlet flow path 88 of the exhaust valve unit 18. The pressure fluid that has flowed into the first output flow path 38a is led out from the output port 28 via the second output flow path 38b.

The pressure fluid that has flowed into the inlet flow path 88 of the exhaust valve unit 18 is guided to the flow hole 100 via the internal flow path 110 and the first attachment recess 104. When the flow hole 100 of the exhaust valve unit 18 is opened, the pressure fluid in the flow hole 100 is led out to the first exhaust flow path 40a via the accommodation chamber 82 and the outlet flow path 90. The pressure fluid that has been guided to the first exhaust flow path 40a is discharged to the outside from the exhaust port 26 via the second exhaust flow path 40b. When the pressure fluid is discharged from the exhaust port 26, the pressure of the pressure fluid led out from the output port 28 decreases.

The pressure of the pressure fluid led out from the output port 28 is detected by the pressure sensor 42. The control unit 19 performs feedback control of the voltage (the opening degree of the flow hole 100) applied to the piezoelectric elements 116 of each of the air supply valve unit 16 and the exhaust valve unit 18 so that the pressure detected by the pressure sensor 42 becomes a set pressure.

According to the present embodiment, the position of the nozzle 66 relative to the valve element 68 can be accurately adjusted by the position adjustment mechanism 76. This enables the opening 102 of the flow hole 100 of the nozzle 66 to be favorably opened and closed.

The valve device 10 is not limited to having the above-described configuration. One of the first contact surface 152 or the second contact surface 154 may extend along the X direction. The first contact surface 152 of the nozzle body 96 may be provided on the outer surface of the nozzle body 96, instead of the inner surface of the locking recess 150.

The following supplementary notes are further disclosed in relation to the above-described disclosure.

### (Supplementary Note 1)

The valve device (10) includes: the nozzle (66) including the flow hole (100) through which a fluid flows; the support member (62) configured to support the nozzle; the valve element (68) including the piezoelectric element (116) and configured to open and close the opening (102) of the flow hole by driving the piezoelectric element; and the position adjustment mechanism (76) configured to adjust the position of the nozzle relative to the valve element.

According to such a configuration, the position of the nozzle relative to the valve element can be accurately adjusted by the position adjustment mechanism. This enables the opening of the flow hole of the nozzle to be favorably opened and closed.

### (Supplementary Note 2)

In the valve device according to Supplementary Note 1, the position adjustment mechanism may include the biasing member (106) configured to bias the nozzle toward the valve element, and the stopper member (132) configured to come into contact with the nozzle to thereby prevent the nozzle from being moved by the biasing member.

According to such a configuration, the position of the nozzle relative to the valve element can be adjusted with a simple configuration.

### (Supplementary Note 3)

In the valve device according to Supplementary Note 2, the stopper member may be provided in the support member so as to be movable in a direction intersecting the biasing direction of the biasing member, and at least one of the first contact surface (152) of the nozzle that contacts the stopper member or the second contact surface (154) of the stopper member that contacts the nozzle may be inclined with respect to the biasing direction.

According to such a configuration, the position of the nozzle with respect to the valve element can be adjusted by advancing and retracting the stopper member with respect to the nozzle.

### (Supplementary Note 4)

In the valve device according to Supplementary Note 3, each of the first contact surface and the second contact surface may be inclined with respect to the biasing direction.

According to such a configuration, since the contact area between the stopper member and the nozzle can be made relatively large, the nozzle on which the biasing force of the biasing member acts can be stably held at a predetermined position.

### (Supplementary Note 5)

In the valve device according to Supplementary Note 3 or 4, the support member may include the recess (86) in which the nozzle is disposed, and the screw hole (134) that opens on the inner peripheral surface of the recess, the biasing member may be interposed between the bottom surface (108) of the recess and the nozzle, and the stopper member may include the threaded portion (138) screwed into the screw hole.

According to such a configuration, the stopper member can be easily advanced and retracted with respect to the nozzle by rotating the threaded portion.

### (Supplementary Note 6)

In the valve device according to Supplementary Note 5, the distal end portion of the threaded portion may be provided with the tapered surface (142) whose diameter decreases toward the distal direction of the threaded portion, and the tapered surface may be the second contact surface.

According to such a configuration, since the tapered surface provided at the distal end portion of the threaded portion is the second contact surface, the stopper member can be made to have a simple configuration and a relatively small configuration.

### (Supplementary Note 7)

In the valve device according to Supplementary Note 6, an end portion of the threaded portion in the direction opposite to the distal end portion may be provided with the operation portion (148) for rotating the threaded portion, and the operation portion may be exposed to the outside of the support member.

According to such a configuration, the threaded portion can be easily rotated by operating the operation portion. Further, since the operation portion is exposed to the outside of the support member, the position of the nozzle relative to the valve element can be adjusted in a state where the nozzle and the valve element are assembled to the support member.

### (Supplementary Note 8)

In the valve device according to any one of Supplementary Notes 5 to 7, the nozzle may include the nozzle body (96), and the nozzle seal member (98) configured to seal a gap between the nozzle body and the inner peripheral surface of the recess, and the nozzle seal member may be located between the bottom surface of the recess and the opening portion (136) of the screw hole formed in the inner peripheral surface of the recess.

According to such a configuration, the nozzle seal member can prevent the fluid from leaking from the screw hole to the outside of the support member.

### (Supplementary Note 9)

In the valve device according to Supplementary Note 8, the nozzle body may be made of a metal material.

According to such a configuration, the rigidity can be easily improved as compared to a case where the nozzle body is made of a resin material. As a result, it is possible to suppress the deformation of the nozzle due to the biasing force from the biasing member. Therefore, it is possible to suppress the inclination of the opening of the flow hole of the nozzle with respect to the valve element in accordance with the deformation of the nozzle.

### (Supplementary Note 10)

In the valve device according to any one of Supplementary Notes 1 to 9, the valve element may include the plate member (112) extending in one direction and having flexibility, one end portion of the plate member may be held by the support member, the piezoelectric element may be disposed on a surface of the plate member that faces in the direction opposite to the nozzle, and the plate member may be elastically deformed in a manner so that the plate member is separated from the nozzle by driving of the piezoelectric element.

According to such a configuration, the valve element can be made to have a simple configuration.

### (Supplementary Note 11)

In the valve device according to Supplementary Note 10, the piezoelectric element may be formed in a plate shape and a plurality of the piezoelectric elements may be stacked.

According to such a configuration, it is possible to increase the amount of elastic deformation of the plate member while suppressing the voltage applied to the piezoelectric element.

### (Supplementary Note 12)

In the valve device according to Supplementary Note 10 or 11, the plate member may be made of a metal material, and the valve element may include the contact portion (114) made of resin, the contact portion being provided on the plate member and configured to come into airtight contact with the nozzle.

According to such a configuration, the valve element can be made to have a simple configuration.

### (Supplementary Note 13)

The valve device according to any one of Supplementary Notes 10 to 12 may further include the valve element biasing member (74) configured to bias the valve element toward the nozzle.

According to such a configuration, since the valve element can be pressed against the nozzle by the valve element biasing member, the opening of the flow hole of the nozzle can be reliably closed by the valve element.

### (Supplementary Note 14)

In the valve device according to Supplementary Note 13, the valve element biasing member may be the spring member made of metal, and the valve device may include the resin plate (70) having an insulating property and configured to support the spring member, and the cover member (64) made of metal and attached to the support member in a state of supporting the resin plate.

According to such a configuration, the spring member made of metal is supported by the resin plate, whereby the cover member can be made of metal. This makes it possible to easily improve the pressure resistance of the cover member.

### (Supplementary Note 15)

In the valve device according to Supplementary Note 14, the attachment recess (130) to which the spring member is attached may be formed in the resin plate.

According to such a configuration, the attachment recess can suppress the displacement of the spring member with respect to the resin plate.

### (Supplementary Note 16)

The valve device according to any one of Supplementary Notes 1 to 15 may further include the body (12) in which the fluid flow path (32) through which the fluid flows is formed, and the pressure sensor (42) configured to detect the pressure of the fluid flowing through the fluid flow path, wherein the through hole (46) that opens in the fluid flow path may be formed in the body, the pressure sensor may include the sensor body (52) disposed outside the fluid flow path, and the introducing tube portion (54) protruding from the sensor body to the fluid flow path via the through hole and configured to introduce the fluid into the sensor body, the introducing tube portion may be provided with the sensor seal member (56) disposed in a state of being spaced apart from the sensor body and configured to seal a gap between the introducing tube portion and the body, and the body may include the seal support portion (58) located between the sensor seal member and the sensor body and configured to support the sensor seal member.

According to such a configuration, the seal support portion can suppress a situation in which the pressure of the fluid flowing through the fluid flow path acts on the sensor body via the sensor seal member. As a result, the pressure of the fluid flowing through the fluid flow path can be accurately detected by the pressure sensor.

The present invention is not limited to the above disclosure, and various modifications are possible without departing from the essence and gist of the present invention.

## Claims

1. A valve device comprising:
a nozzle (66) including a flow hole (100) through which a fluid flows;
a support member (62) configured to support the nozzle;
a valve element (68) including a piezoelectric element (116) and configured to open and close an opening (102) of the flow hole by driving the piezoelectric element; and
a position adjustment mechanism (76) configured to adjust a position of the nozzle relative to the valve element.

2. The valve device according to claim 1, wherein
the position adjustment mechanism includes:
a biasing member (106) configured to bias the nozzle toward the valve element; and
a stopper member (132) configured to come into contact with the nozzle to thereby prevent the nozzle from being moved by the biasing member.

3. The valve device according to claim 2, wherein
the stopper member is provided in the support member so as to be movable in a direction intersecting a biasing direction of the biasing member, and
at least one of a first contact surface (152) of the nozzle that contacts the stopper member or a second contact surface (154) of the stopper member that contacts the nozzle is inclined with respect to the biasing direction.

4. The valve device according to claim 3, wherein
each of the first contact surface and the second contact surface is inclined with respect to the biasing direction.

5. The valve device according to claim 3, wherein
the support member includes:
a recess (86) in which the nozzle is disposed; and
a screw hole (134) that opens on an inner peripheral surface of the recess,
the biasing member is interposed between a bottom surface (108) of the recess and the nozzle, and
the stopper member includes a threaded portion (138) screwed into the screw hole.

6. The valve device according to claim 5, wherein
a distal end portion of the threaded portion is provided with a tapered surface (142) whose diameter decreases toward a distal direction of the threaded portion, and
the tapered surface is the second contact surface.

7. The valve device according to claim 6, wherein
an end portion of the threaded portion in a direction opposite to the distal end portion is provided with an operation portion (148) for rotating the threaded portion, and
the operation portion is exposed to an outside of the support member.

8. The valve device according to claim 5, wherein
the nozzle includes:
a nozzle body (96); and
a nozzle seal member (98) configured to seal a gap between the nozzle body and the inner peripheral surface of the recess, and
the nozzle seal member is located between the bottom surface of the recess and an opening portion (136) of the screw hole formed in the inner peripheral surface of the recess.

9. The valve device according to claim 8, wherein
the nozzle body is made of a metal material.

10. The valve device according to claim 1, wherein
the valve element includes a plate member (112) extending in one direction and having flexibility,
one end portion of the plate member is held by the support member,
the piezoelectric element is disposed on a surface of the plate member that faces in a direction opposite to the nozzle, and
the plate member is elastically deformed in a manner so that the plate member is separated from the nozzle by driving of the piezoelectric element.

11. The valve device according to claim 10, wherein
the piezoelectric element is formed in a plate shape and a plurality of the piezoelectric elements are stacked.

12. The valve device according to claim 10, wherein
the plate member is made of a metal material, and
the valve element includes a contact portion (114) made of resin, the contact portion being provided on the plate member and configured to come into airtight contact with the nozzle.

13. The valve device according to claim 10, further comprising
a valve element biasing member (74) configured to bias the valve element toward the nozzle.

14. The valve device according to claim 13, wherein
the valve element biasing member is a spring member made of metal, and
the valve device further comprises:
a resin plate (70) having an insulating property and configured to support the spring member; and
a cover member (64) made of metal and attached to the support member in a state of supporting the resin plate.

15. The valve device according to claim 14, wherein
an attachment recess (130) to which the spring member is attached is formed in the resin plate.

16. The valve device according to any one of claims 1 to 15, further comprising:
a body (12) in which a fluid flow path (32) through which the fluid flows is formed; and
a pressure sensor (42) configured to detect a pressure of the fluid flowing through the fluid flow path, wherein
a through hole (46) that opens in the fluid flow path is formed in the body,
the pressure sensor includes:
a sensor body (52) disposed outside the fluid flow path; and
an introducing tube portion (54) protruding from the sensor body to the fluid flow path via the through hole and configured to introduce the fluid into the sensor body,
the introducing tube portion is provided with a sensor seal member (56) disposed in a state of being spaced apart from the sensor body and configured to seal a gap between the introducing tube portion and the body, and
the body includes a seal support portion (58) located between the sensor seal member and the sensor body and configured to support the sensor seal member.
